# EUROPEAN PATENT APPLICATION

(11) **EP 4 421 936 A1**
(43) Date of publication of application: **28.08.2024**
(21) Application number: 23857520.3
(22) Date of filing: 28.06.2023
(51) Int. Cl.: H01M 10/0567, H01M 10/0569, H01M 10/052, H01M 4/525, H01M 4/505, H01M 4/36, H01M 4/587, H01M 4/48, H01M 4/38

(54) **NON-AQUEOUS ELECTROLYTE COMPOSITION AND LITHIUM SECONDARY BATTERY COMPRISING SAME**

(30) Priority: 26.08.2022 KR 20220107593
(71) Applicant: LG Energy Solution, Ltd., Seoul 07335 (KR)
(72) Inventor: JEONG, You Kyeong, Daejeon 34122 (KR)
(74) Representative: Hoffmann Eitle
(86) International application number: PCT/KR2023/008998
(87) International publication number: WO 2024/043482

(57) **Abstract**

Disclosed herein relates to an electrolyte composition for a lithium secondary battery, wherein the electrolyte composition comprises an electrolyte represented by Chemical Formula 1 and has an oxidation potential window at 4.5 V or more, which has the advantage of removing oxidative degradation of the electrolyte composition during charging and discharging of the battery under high voltage conditions.

## Description

### [Technical Field]

The present invention relates to a non-aqueous electrolyte composition, and more particularly to a non-aqueous liquid electrolyte composition having an enhanced oxidation potential window, enabling the preparation of a cell with excellent oxidation stability and high energy density, and to a lithium secondary battery comprising the same.

This application claims the benefit of priority based on Korean Patent Applications No. 10-2022-0107593, filed on August 26, 2022, the disclosure of which is incorporated herein by reference in its entirety.

### [Background Technology of the Invention]

In recent years, secondary batteries have been widely applied in small devices such as portable electronics, as well as in medium and large devices such as battery packs or power storage in hybrid or electric vehicles.

These secondary batteries are manufactured by applying and drying a composition containing an electrode active material to a suitable thickness and length on a current collector, or by forming the electrode active material itself into a film to create a positive electrode and a negative electrode and winding or laminating them together with a separator, which is an insulator, between them to create an electrode assembly, which is then placed in a can or similar container and filled with an electrolyte.

Here, the electrolyte should have a potential window wider than the potential difference between the positive electrode and the negative electrode to inhibit the side reactions of the electrolyte induced at the electrode active material interface.

However, as the scope of application of secondary batteries has expanded, the demand for batteries with higher energy density and high voltage of 4V or more has increased. To meet this demand, conventional positive electrodes use positive electrode active materials for high voltages, causing the potential window of the electrolyte to be narrower than the potential window of the electrode active material.

To solve this problem, the degradation of the electrolyte can be inhibited by forming a protective film that prevents direct contact between the electrolyte and the electrode active material. This provides a way to maintain capacity during long cycles.

As an example, succinonitrile, adiponitrile, glutaronitrile, and the like are used as electrolyte additives for positive electrodes protection. They are known to exhibit good thermal properties and high temperature performance and improve voltage drop during the activation process. In addition, they are known to increase ionic conductivity and polarity, and the nitrile groups are strongly bonded to transition metals such as cobalt on the positive electrode surface, and the metal-ligand bonds inhibit various interfacial side reactions, thus blocking gas generation or micro-short circuit pathways. However, although the above electrolyte additives have a good effect of protecting the surface of the positive electrode active material as described above, they do not form a protective film on the negative electrode active material and therefore do not inhibit the side reactions of the negative electrode active material with the electrolyte. Accordingly, cell performance can be implemented by separately adding electrolyte additives such as vinylene carbonate to control the reactivity with the negative electrode.

Meanwhile, electrolyte additives such as vinylene carbonate can reduce the reactivity of the electrolyte with the negative electrode to suppress side reactions of the electrolyte at the negative electrode, but due to their low oxidation resistance, they can actually generate gas at the positive electrode when operated at high temperature and high voltage for a long time.

Therefore, there is a need for research on electrolytes that not only suppress electrolyte side reactions at the negative electrode, but also improve side reactions at the positive electrode by having a high oxidation potential window.

### [Description of the Invention]

### [Technical Problem]

The object of the present invention is to provide an electrolyte composition for lithium secondary batteries that has a high oxidation potential window, improves side reactions at the positive electrode, and is usable under high voltage conditions.

### [Technical Solution]

To address the problems described above,
In one exemplary embodiment, the present invention provides an electrolyte composition including a non-aqueous organic solvent, a lithium salt, and an electrolyte additive represented by Chemical Formula 1 below, wherein the oxidation potential window is above 4.5 volts:

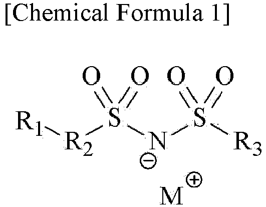

In Chemical Formula 1,
R₁ is 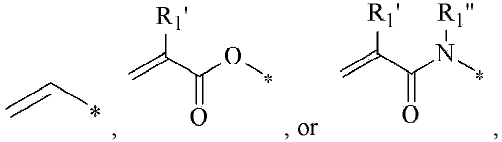
R₁' and Ri"are hydrogen or methyl group, respectively,
R₂ includes one or more species selected from a group consisting of an oxygen atom; a nitrogen atom; a sulfur atom; an arylene group having a carbon number of 6 to 20; an aryleneoxy group having a carbon number of 6 to 20; a heteroarylene group having a carbon number of 5 to 10 including one or more heteroatoms among N, S, and O; a heteroaryleneoxy group having a carbon number of 5 to 10 including one or more heteroatoms among N, S, and O; an alkylene group having a carbon number of 1 to 10; an alkyleneoxy group having a carbon number of 1 to 10; a cycloalkylene group having a carbon number of 5 to 10; and 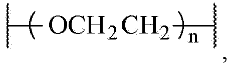
R₃ is a fluorine group, an alkyl group with carbon number 1 to 10, an alkoxy group with carbon number 1 to 10, or 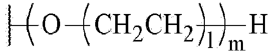 , wherein one or more of the hydrogens included in the alkyl group, alkylene group, alkoxy group, alkyleneoxy group, cycloalkylene group, 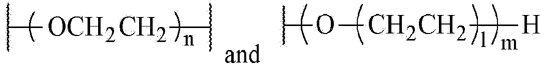 is optionally substituted with a fluorine atom,
M includes one or more species among lithium, sodium, potassium, tetraalkylammonium with a carbon number of 1 to 4, and tetraalkylphosphonium with a carbon number of 1 to 4,
l is an integer from 1 to 6, and
m and n are integers from 2 to 20.

Here, the oxidation potential window may be between 5.0 to 6.0 volts.

In addition, in Chemical Formula 1,
R₂ is ethylene, propylene, cyclohexylene, phenylene, oxymethylene, pyrrylene, oxyphenylene, oxynaphthalenylene, oxypyrrylene, oxythiophenylene, oxypuranylene, or 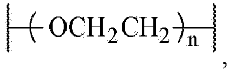
R₃ is a fluorine group, a methyl group, a methyl fluoride group, a methoxy group, a methoxy fluoride group, or 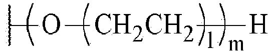 , wherein one or more hydrogens included in 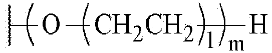 may be optionally substituted with a fluorine atom, and
M may be lithium.

As an example, an electrolyte additive represented by Chemical Formula 1 may include one or more compounds among <Structural Formula 1> to <Structural Formula 17 below>:

| | | |
|---|---|---|
| <Structural Formula 1> | <Structural Formula 2> | <Structural Formula 3> |
| 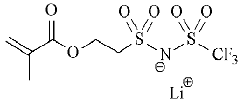 | 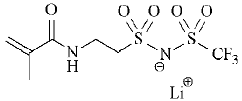 | 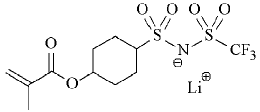 |
| <Structural Formula 4> | <Structural Formula 5> | <Structural Formula 6> |
| 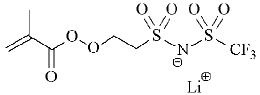 | 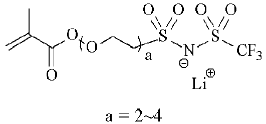 | 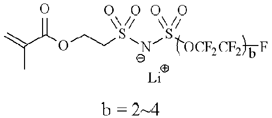 |
| <Structural Formula 7> | <Structural Formula 8> | <Structural Formula 9> |
| 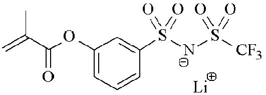 | 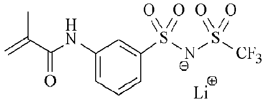 | 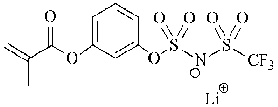 |
| <Structural Formula 10> | <Structural Formula 11> | <Structural Formula 12> |
| 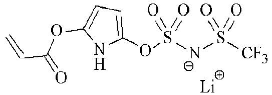 | 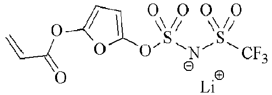 | 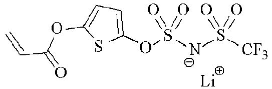 |

| | | |
|---|---|---|
| <Structural Formula 13> | <Structural Formula 14> | <Structural Formula 15> |
| 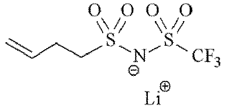 | 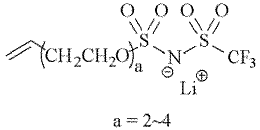 | 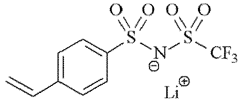 |
| <Structural Formula 16> | <Structural Formula 17> | |
| 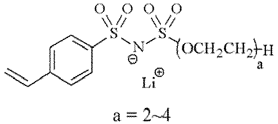 | 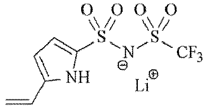 | |

Moreover, an electrolyte additive represented by Chemical Formula 1 may be included no more than 10 wt% by weight of the total weight of the electrolyte composition. In addition, a non-aqueous organic solvent may include an ester-based solvent represented by Chemical Formula 2 below:

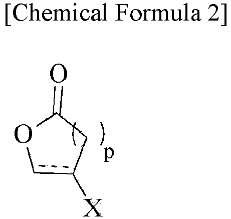

In Chemical Formula 2,
- - - - is either a single bond or a double bond,
X is hydrogen, fluoro group, methyl group, ethyl group, methyl fluoride group, ethyl fluoride group, or vinyl group, respectively, and
p is an integer from 1 to 3.

Specifically, the ester-based solvent represented by Chemical Formula 2 may include one or more species among dihydrofuranone, vinyl dihydrofuranone, fluorodihydrofuranone, furanone, and tetrahydropyranone.

Moreover, a non-aqueous organic solvent may further include one or more co-solvents among: an ether-based solvent containing fluorine; a cyclic carbonate-based solvent containing fluorine; a linear carbonate-based solvent; a phosphate-based solvent and a sulfone-based solvent.

In this case, a co-solvent may be included in less than 50 volume% with respect to the total volume of non-aqueous organic solvents.

Furthermore, in an exemplary embodiment, the present invention provides
a lithium secondary battery including:
an electrode assembly including a positive electrode, a negative electrode, and a separator disposed between the positive electrode and the negative electrode; and
the above-mentioned electrolyte composition according to the present invention.

Here, the positive electrode may include one or more positive electrode active materials among lithium metal oxides represented by Chemical Formula 3 or Chemical Formula 4 below:

[Chemical Formula 3] Liₓ[Ni_{y}Co_{z}Mn_{w}M¹ᵥ]O₂

[Chemical Formula 4] LiM²ₚMn_{q}PᵣO₄

In Chemical Formula 3 and Chemical Formula 4,
M¹ is one or more of the following elements: W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.5≤y<1, 0<z≤0.3, 0<w≤0.3, and 0≤v≤0.1, respectively, wherein y+z+w+v=1,
M² is Ni, Co, or Fe,
p is 0.05≤p≤1.0 and,
q is either 1-p or 2-p, and
r is 0 or 1.

Specifically, the positive electrode active material may include one or more species among LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂ and LiNi_{0.5}Mn_{1.5}O₄.

In addition, the negative electrode may include a first negative electrode active material containing carbon material and a second negative electrode active material containing silicon material, and the carbon material may include at least one selected from the group consisting of natural graphite, artificial graphite, expanded graphite, hard carbon, carbon black, acetylene black, and ketjen black.

Moreover, the silicon material includes one or more selected from the group consisting of silicon (Si), silicon carbide (SiC), and silicon oxide (SiO_{q}, where 0.8≤q≤2.5).

Additionally, the second negative electrode active material may be included in 1 to 20 wt% of the total weight of the negative electrode active material.

### [Advantageous Effects]

The electrolyte composition for a lithium secondary battery according to the present invention includes an electrolyte represented by Chemical Formula 1 and has the advantage that the oxidation stability of the electrolyte composition is improved by having an oxidation potential window at 4.5 V or more, which can inhibit the decomposition of the electrolyte composition at high voltage.

### [Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Further, in the present invention, "comprising as a major component" may mean comprising 50 wt% or more (or 50 volume% or more), 60 wt% or more (or 60 volume% or more), 70 wt% or more (or 70 volume% or more), 80 wt% or more (or 80 volume% or more), 90 wt% or more (or 90 volume% or more), or 95 wt% or more (or 95 volume% or more) of the defined component relative to the total weight (or total volume). For example, "comprising graphite as the major component of the negative electrode active material" may mean comprising 50 wt% or more, 60wt% or more, 70 wt% or more, 80 wt% or more, 90 wt% or more, or 95 wt% or more of graphite relative to the total weight of the negative electrode active material, and in some cases may mean that the entire negative electrode active material is composed of graphite and comprises 100% graphite.

Hereinafter, the present invention will be described in more detail.

### Electrolyte Composition for Lithium Secondary Batteries

In an exemplary embodiment, the present invention provides
an electrolyte composition including a non-aqueous organic solvent, a lithium salt, and an electrolyte additive represented by Chemical Formula 1 below, wherein
the oxidation potential window is above 4.5 volts:

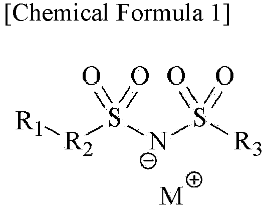

In Chemical Formula 1,
R₁ is 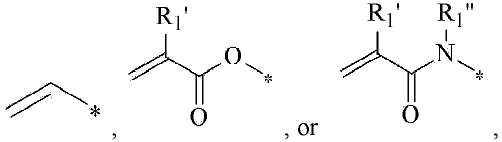
R₁' and Ri"are hydrogen or methyl group, respectively,
R₂ includes one or more species selected from a group consisting of an oxygen atom; a nitrogen atom; a sulfur atom; an arylene group having a carbon number of 6 to 20; an aryleneoxy group having a carbon number of 6 to 20; a heteroarylene group having a carbon number of 5 to 10 including one or more heteroatoms among N, S, and O; a heteroaryleneoxy group having a carbon number of 5 to 10 including one or more heteroatoms among N, S, and O; an alkylene group having a carbon number of 1 to 10; an alkyleneoxy group having a carbon number of 1 to 10; a cycloalkylene group having a carbon number of 5 to 10; and 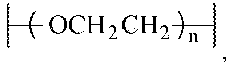
R₃ is a fluorine group, an alkyl group with carbon number 1 to 10, an alkoxy group with carbon number 1 to 10, or 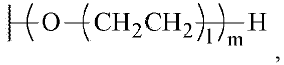 wherein
one or more of the hydrogens included in the alkyl group, alkylene group, alkoxy group, alkyleneoxy group, cycloalkylene group, 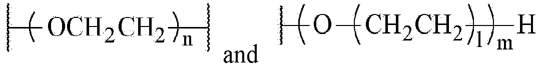 is optionally substituted with a fluorine atom,
M includes one or more species among lithium, sodium, potassium, tetraalkylammonium with a carbon number of 1 to 4, andtetraalkylphosphonium with a carbon number of 1 to 4,
l is an integer from 1 to 6, and
m and n are integers from 2 to 20.

An electrolyte composition for a lithium secondary battery according to the invention includes a non-aqueous organic solvent and a lithium salt, together with an electrolyte additive represented by Chemical Formula 1. As shown in Chemical Formula 1, the electrolyte additive centered on the sulfonylimide group, on one side, includes i) a structure including a saturated hydrocarbon chain or having an oxygen atom introduced into the saturated hydrocarbon chain, or ii) an ionic compound having a parent nucleus to which a vinyl group, a (meth)acrylate group, or an acrylamide group is bonded (i.e., "R₁") through a structure that extends the conjugation of the sulfonyl imide group or having a polyglycol unit (i.e., "R₂").

The electrolyte additive may have a vinyl group, a (meth)acrylate group, or an acrylamide group bonded to one side of the sulfonylimide, and may introduce i) a structure including saturated hydrocarbon chains or having oxygen atoms introduced into saturated hydrocarbon chains, or ii) a linker (R₂) whose structure extends the conjugation of the sulfonyl imide group or has a polyglycol unit, thereby uniformly forming organic and/or inorganic films on the positive electrode and negative electrode surfaces upon activation of the secondary battery. In other words, the electrolyte additive may be directly incorporated in monomeric form into the organic and/or inorganic film formed on the positive electrode and/or negative electrode surface upon activation of the secondary battery. Furthermore, the electrolyte additive may increase the oxidation potential window of the electrolyte and thereby inhibit side reactions between the positive electrode and/or negative electrode and the electrolyte composition. Thus, the electrolyte additive may expand the oxidation potential window of the electrolyte composition, while simultaneously improving the electrical performance of a secondary battery including it.

To this end, in the compound represented by Chemical Formula 1 above,
R₂ is ethylene, propylene, cyclohexylene, phenylene, oxymethylene, pyrrylene, oxyphenylene, oxynaphthalenylene, oxypyrrylene, oxythiophenylene, oxypuranylene, or 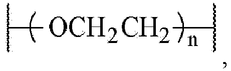
R₃ is a fluorine group, a methyl group, a methyl fluoride group, a methoxy group, a methoxy fluoride group, or 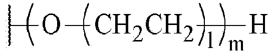 , wherein one or more hydrogens included in 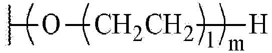 is optionally substituted with a fluorine atom, and
M is lithium, l is an integer from 1 or 2, and m and n may be each independently an integer from 2 to 10.

As an example, the compound represented by Chemical Formula 1 may be one or more of the compounds among <Structural Formula 1> to <Structural Formula 17> below:

| | | |
|---|---|---|
| <Structural Formula 1> | <Structural Formula 2> | <Structural Formula 3> |
| 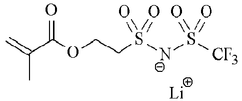 | 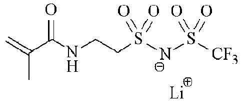 | 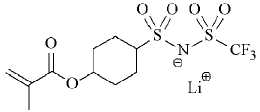 |
| <Structural Formula 4> | <Structural Formula 5> | <Structural Formula 6> |
| 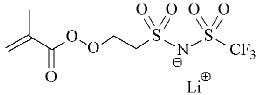 | 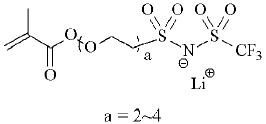 | 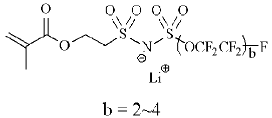 |
| <Structural Formula 7> | <Structural Formula 8> | <Structural Formula 9> |
| 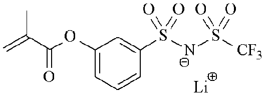 | 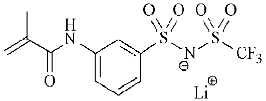 | 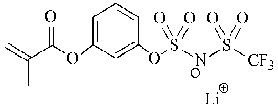 |
| <Structural Formula 10> | <Structural Formula 11> | <Structural Formula 12> |
| 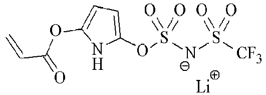 | 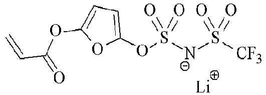 | 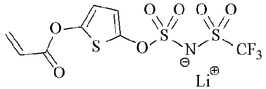 |
| <Structural Formula 13> | <Structural Formula 14> | <Structural Formula 15> |
| 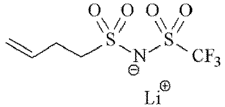 | 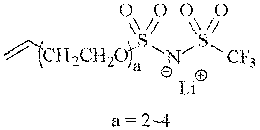 | 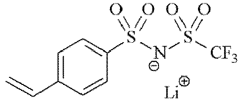 |
| <Structural Formula 16> | <Structural Formula 17> | |
| 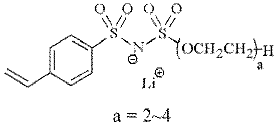 | 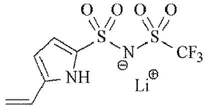 | |

The electrolyte additive represented by <Structural Formula 1> to <Structural Formula 17> can uniformly form an organic and inorganic coating layer on the surface of the positive electrode as well as the negative electrode upon activation of the secondary battery. Furthermore, the electrolyte additive can easily increase the oxidation potential window of the electrolyte composition, which can effectively suppress the side reaction of the electrode and the electrolyte during charging and discharging of the secondary battery.

In one example, the electrolyte composition according to the present invention may have an oxidation potential window of 4.5V or more. More specifically, the oxidation potential window of the electrolyte composition may be in the range of 4.5V to 7.0V, 5.0V to 6.5V, 5.0V to 6.0V, 5.3V to 6.5V, or 5.5V to 6.0V.

The oxidation potential window refers to a range of voltages at which no additional electrochemical reactions occur inside the secondary battery other than the electrochemical redox occurring between the positive electrode and negative electrode. Furthermore, the oxidation potential window may be a value measured when a lithium electrode is used as a reference electrode, and thus may refer to a relative value to Li/Li+. The present invention has a problem that if the oxidation potential window of the electrolyte is outside the above range, the potential window narrows, so that the non-aqueous electrolyte itself causes electrolysis as the battery is charged and discharged, shortening the life of the lithium secondary battery, and safety problems arise due to gases generated. In addition, the electrolyte composition according to the present invention can be more stable with respect to the potential applied during charging and discharging of the secondary battery if it satisfies the range of the oxidation potential window described above. Accordingly, a lithium secondary battery including the electrolyte composition can not only improve the life of the battery, but also reduce the risk of explosion and the like.

Further, the electrolyte additive may be included in the electrolyte composition at a specific content. Specifically, the electrolyte additive including a compound represented by Chemical Formula 1 may be included in an amount of 10 wt% or less based on the total weight of the electrolyte composition, more specifically, it may be included in an amount of 0.01 to 5 wt%, more specifically, it may be included in an amount of 0.05 to 3 wt% or 1.0 to 2.5 wt% based on the total weight of the electrolyte composition. The present invention prevents the electrolyte composition from becoming less wettable for electrodes and separators due to an increase in viscosity of the electrolyte composition when the electrolyte additive is used in an excessive amount, while also preventing the ionic conductivity of the electrolyte composition from being reduced, resulting in poor cell performance. Furthermore, the present invention can prevent the effect of the additive from being implemented in an insignificant amount when the content of the electrolyte additive is used outside the above range.

The electrolyte composition according to the invention is a liquid electrolyte, including a non-aqueous organic solvent together with a lithium salt. In this case, the non-aqueous organic solvent may include as a main component an ester-based solvent represented by the following Chemical Formula 2 for a synergy effect with the electrolyte additive:

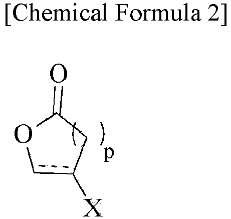

In Chemical Formula 2,
- - - - is either a single bond or a double bond,
X is hydrogen, fluoro group, methyl group, ethyl group, methyl fluoride group, ethyl fluoride group, or vinyl group, respectively, and
p is an integer from 1 to 3.

In one example, the ester-based solvent represented by Chemical Formula 2 may include one or more of the ester-based compounds shown below:

| | | | |
|---|---|---|---|
| Dihydrofuranone: | 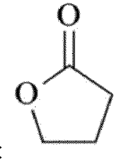 | Vinyl dihydrofuranone: | 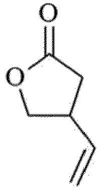 |
| Fluorodihydrofuranone: | 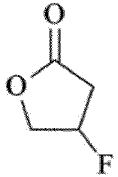 | Furanone: | 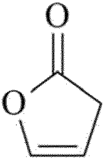 |
| Tetrahydropyranone: | 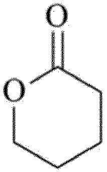 | | |

By themselves, the ester-based compounds implement a lower oxidation potential window of the electrolyte composition compared to the carbonate-based solvents. However, when the ester-based compounds are used together with an electrolyte additive represented by Chemical Formula 1, not only does the oxidation potential window have a better expandability, but the stability of the electrolyte can be further improved, resulting in less gas generation at high temperatures and/or high voltages.

Moreover, the non-aqueous organic solvent may further include, in addition to the ester-based solvent described above, one or more of the following co-solvents: a fluorine-containing ether-based solvent; a fluorine-containing cyclic carbonate-based solvent; a linear carbonate-based solvent; a phosphate-based solvent; and a sulfone-based solvent.

Specifically, the fluorine-containing ether-based solvent may be 1,1,2,2-tetrafluoroethyl-2,2,3,3-tetrafluoropropyl ether (TTE) or the like, and the fluorine-containing cyclic carbonate-based solvent may be fluoroethylene carbonate (FEC) or the like. Furthermore, the linear carbonate-based solvent may be ethyl methyl carbonate (EMC), dimethyl carbonate (DMC), diethyl carbonate (DEC), and the like, and the phosphate-based solvent can be trimethyl phosphate (TMP), tris(2-ethylhexyl) phosphate, and the like. Furthermore, the sulfone-based solvent may be sulfolane, methyl sulfolane, dimethyl sulfoxide, sulfonamide, and the like.

The co-solvent may be one type alone mixed with an ester-based solvent, or two or more types mixed with an ester-based solvent in any combination to suit the application, from the standpoint of electrochemical stability against redox and chemical stability against heat and reaction with solutes.

Further, the co-solvent may be mixed with the ester-based solvent to satisfy a certain volume ratio when mixed. Specifically, the co-solvent may be included in less than 50 volume% based on the total volume of the non-aqueous organic solvent, more specifically, may be included in 40 volume% or less, 30 volume% or less, 20 volume% or less, 1 to 30 volume%, 1 to 20 volume%, 5 to 20 volume%, 10 to 20 volume%, or 20 to 30 volume%.

By adjusting the content of the co-solvent in the total non-aqueous organic solvent to the above ratio, the present invention can maintain the compatibility of the ester-based solvent and the co-solvent high, and at the same time, the performance of the battery can be improved by increasing the charge mobility and/or ion mobility of the battery.

Moreover, the non-aqueous organic solvent may be further mixed with solvents used in the art for non-aqueous electrolytes, wherein the amount of mixing may be less than 10 wt% based on the total weight of the non-aqueous organic solvent. Non-aqueous organic solvents that can be mixed include, for example, aprotic organic solvents such as N-methyl-2-pyrrolidinone, ethylene carbonate (EC), propylene carbonate, butylene carbonate, 1,2-dimethoxyethane (DME), tetrahydrofuran, 2-methyl tetrahydrofuran, 1,3-dioxolane, formamide, dimethylformamide, dioxolane, acetonitrile, nitromethane, methyl formate, methyl acetate, phosphoric acid triester, trimethoxymethane, dioxolane derivatives, 1,3-dimethyl-2-imidazolidinone, propylene carbonate derivatives, tetrahydrofuran derivatives, ether, methyl pyrophosphate, ethyl propionate, and the like.

Meanwhile, the lithium salt may be applied without limitation as long as it is used in any non-aqueous electrolyte known in the art. Specifically, the lithium salt may include one or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, (FSO₂)₂NLi, LiBF₂(C₂O₄) (LiODFB), LiTDI, C₄F₂LiO₈P (LiDFOP), and LiF₂NO₄S₂ (LiFSI).

While there is no particular limitation on the concentration of these lithium salts, the lower limit of a suitable concentration range is 0.5 mol./L or more, more particularly 0.7mol./L or more, more particularly 0.9mol./L or more, and the upper limit is 2.5mol./L or less, more particularly 2.0mol./L or less, more particularly 1.5mol./L or less. When the concentration of the lithium salt is less than 0.5mol./L, the ionic conductivity is reduced, which may cause the cycle characteristics and output characteristics of the non-aqueous electrolyte battery to be reduced. In addition, if the concentration of lithium salts exceeds 2.5mol.AL, the viscosity of the electrolyte for non-aqueous electrolyte batteries increases, which may also reduce the ionic conductivity and may reduce the cycle characteristics and output characteristics of non-aqueous electrolyte batteries.

In addition, when a large amount of lithium salt is dissolved in a non-aqueous organic solvent at one time, the liquid temperature may rise due to the heat of dissolution of the lithium salt. If the temperature of the non-aqueous organic solvent rises significantly due to the heat of dissolution of the lithium salts, there is a risk that fluorine-containing lithium salts may accelerate their decomposition and produce hydrogen fluoride (HF). Hydrogen fluoride (HF) is undesirable because it causes degradation of battery performance. Therefore, the temperature at which the lithium salt is dissolved in the non-aqueous organic solvent is not particularly limited, but may be adjusted to -20 to 80°C, and more particularly may be adjusted to 0 to 60°C.

Furthermore, the electrolyte composition may further include additives in addition to the basic components described above. Additives commonly used in the non-aqueous electrolytes of the present invention may be added in any proportion without compromising the essence of the present invention. Specifically, additives such as cyclohexylbenzene, biphenyl, t-butylbenzene, carbonate, vinyl ethylene carbonate, difluoroanisole, fluoroethylene carbonate, propanesultone, succinonitrile, dimethylvinylene carbonate, and the like may be added. These additives can have an overcharge preventing effect, a negative electrode film forming effect, and a positive electrode protecting effect. It is also possible to use electrolyte for non-aqueous electrolyte batteries by solidifying through gelling agents or cross-linking polymers, such as when used in non-aqueous electrolyte batteries called lithium polymer batteries.

### Lithium Secondary Battery

Furthermore, in one exemplary embodiment, the present invention provides a lithium secondary battery including:
an electrode assembly including a positive electrode,
a negative electrode, and
a separator disposed between the positive electrode and the negative electrode; and
the above-mentioned electrolyte composition according to the present invention.

A lithium secondary battery according to the present invention includes an electrode assembly having a positive electrode, a separator, and a negative electrode disposed sequentially; and an electrolyte composition having a lithium salt and an electrolyte additive dissolved in a non-aqueous organic solvent. In this case, the lithium secondary battery includes the electrolyte composition of the above-described present invention having an expanded oxidation potential window, so that side reactions such as decomposition of the electrolyte can be improved when operating under high voltage conditions, and thus can be usefully applied to fields requiring high voltage operating conditions.

In the following, each component of the lithium secondary battery is described in more detail.

The electrode assembly includes a positive electrode, a separator, and a negative electrode. Here, the positive electrode is provided with a positive electrode composite layer prepared by applying, drying, and pressing a slurry including a positive electrode active material onto a positive electrode current collector, and may optionally further including a conductive material, a binder, other additives, and the like as required.

The positive electrode active material may include one or more of the lithium metal oxides represented by Chemical Formula 3 and Chemical Formula 4 below, which are electrochemically reactive materials on the positive electrode current collector and are capable of reversibly intercalating and deintercalating lithium ions:

[Chemical Formula 3] Liₓ[Ni_{y}Co_{z}Mn_{w}M¹ᵥ]O₂

[Chemical Formula 4] LiM²ₚMn_{q}PᵣO₄

In Chemical Formula 3 and Chemical Formula 4,
M¹ is one or more of the following elements: W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w, and v are 1.0≤x≤1.30, 0.5≤y<1, 0<z≤0.3, 0<w≤0.3, and 0≤v≤0.1, respectively, wherein y+z+w+v=1,
M² is Ni, Co, or Fe,
p is 0.05≤p≤1.0 and,
q is either 1-p or 2-p, and
r is 0 or 1.

Lithium metal oxides, represented by Chemical Formula 3 and Chemical Formula 4, are materials containing a high content of nickel (Ni) and manganese (Mn), respectively, and have the advantage of being able to stably supply high capacity and/or high voltage electricity when used as positive electrode active materials.
Here, the lithium metal oxide represented by Chemical Formula 3 may include LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, and the like, and the lithium metal oxide represented by the Chemical Formula 4 may include LiNi_{0.7}Mn_{1.3}O₄; LiNi_{0.5}Mn_{1.5}O₄; LiNi_{0.3}Mn_{1.7}O₄, LiFePO₄, LiFe_{0.9}Mn_{0.1}PO₄, LiFe_{0.7}Mn_{0.3}PO₄, LiFe_{0.5}Mn_{0.5}PO₄, and the like, which may be used alone or in combination.

Positive electrode active materials such as lithium iron phosphate (LiFePO₄) are difficult to reach the voltage conditions required to form an organic-inorganic film on the surface of the positive electrode composite layer during the activation process of the battery, and thus it is difficult to form the organic-inorganic film stably. However, lithium metal oxides represented by Chemical Formula 3 and Chemical Formula 4, when used as positive electrode active materials, can easily satisfy the voltage conditions required to form an organic-inorganic film during the activation process of the battery, and thus can form an organic-inorganic film stably and uniformly on the positive electrode surface. Furthermore, the organic-inorganic film formed in this way can inhibit the oxidation of the electrolyte composition induced on the positive electrode surface.

Additionally, the positive electrode active material may be included in 85 parts by weight or more based on the weight of the positive electrode composite layer, and more specifically may be included in 90 parts by weight or more, 93 parts by weight or more, or 95 parts by weight or more.

Moreover, the positive electrode composite layer may further include, in addition to the positive electrode active material, a conductive material, a binder, other additives, and the like.

Here, the conductive material used to improve the electrical performance of the positive electrode may be any material conventionally used in the art. Specifically, the conductive material may include one or more selected from the group consisting of natural graphite, artificial graphite, carbon black, acetylene black, denka black, ketjen black, super-P, channel black, furnace black, lamp black, thermal black, graphene, and carbon nanotubes.

Furthermore, the conductive material may be included from 0.1 to 5 parts by weight with respect to the weight of each positive electrode composite layer, more particularly, may be included from 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the binder serves to cause the positive electrode active material, positive electrode additive, and conductive material to be bonded together, and may be used without being particularly limited as long as it has this function. Specifically, the binder may include one or more resins selected from polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidenefluoride.

Moreover, the binder may be included from 1 to 10 parts by weight with respect to the weight of each positive electrode composite layer, more particularly, may be included from 2 to 8 parts by weight; or from 1 to 5 parts by weight.

The total thickness of the positive electrode composite layer is not particularly limited, but may be from 50µm to 300µm, and more particularly from 100µm to 200µm; 80µm to 150µm; 120µm to 170µm; 150µm to 300µm; 200µm to 300µm; or 150µm to 190µm.

In addition, as a positive electrode current collector, the positive electrode may use a material having a high conductivity without causing chemical changes in the battery. For example, the positive electrode current collector may be stainless steel, aluminum, nickel, titanium, calcined carbon, or the like. If the positive electrode current collector is aluminum or stainless steel, it may also use those that are surface-treated with carbon, nickel, titanium, silver, or the like. Furthermore, the average thickness of the current collector may be suitably applied from 3 to 500µm, considering the conductivity and total thickness of the positive electrode to be manufactured.

Further, like the positive electrode, the negative electrode is provided with a negative electrode composite layer prepared by applying, drying, and pressing a negative electrode active material onto the negative electrode current collector, and may optionally further include a conductive material, a binder, other additives, and the like, as required.

The negative electrode active material may include a carbon material. Specifically, the carbon material refers to a material having carbon atoms as its main component, and such carbon material may include one or more selected from natural graphite, artificial graphite, expanded graphite, hard carbon, carbon black, acetylene black, andketjen black.

In addition, the negative electrode active material may further include a silicon material in addition to the carbon material. The silicon material refers to a material having silicon atoms as its main component. Such silicon materials may include silicon (Si), silicon carbide (SiC), silicon monoxide (SiO), or silicon dioxide (SiO2), alone or in combination. As a silicon (Si) containing material, if the negative electrode active materials are included in the negative electrode composite layer with silicon monoxide (SiO) and silicon dioxide (SiO₂) homogeneously mixed or compounded, they may be labeled as silicon oxide (SiO_{q}, where 0.8≤q≤2.5).

Furthermore, the silicon material may be included in 1 to 20 wt%, and more particularly 3 to 10 wt%; 8 to 15 wt%; 13 to 18 wt%; or 2 to 8 wt%, with respect to the total weight of the negative electrode active material. By adjusting the content of the silicon material to the above content ranges, the present invention can maximize the energy density of the battery.

Furthermore, the negative electrode current collector is not particularly limited as long as it has a high conductivity without causing chemical changes in the battery. For example, the negative electrode current collector may be copper, stainless steel, nickel, titanium, calcined carbon, or the like. If the negative electrode current collector is copper or stainless steel, it may also use those that are surface-treated with carbon, nickel, titanium, silver, or the like. Furthermore, the average thickness of the negative electrode current collector may be appropriately applied from 1 to 500µm, considering the conductivity and total thickness of the negative electrode to be manufactured.

Meanwhile, the separator interposed between the positive electrode and the negative electrode of each unit cell refers to an insulating thin film having high ionic permeability and mechanical strength. As the separator, it is not particularly limited as long as it is those conventionally used in the art, but in particular, it may use those including one or more polymers among polypropylene; polyethylene; and polyethylene-propylene copolymer, which are chemically resistant and hydrophobic. The separator may take the form of a porous polymeric substrate, such as a sheet or nonwoven fabric including the above-described polymers, and in some cases may take the form of a composite separator in which organic or inorganic particles are coated on the porous polymeric substrate by an organic binder. Furthermore, the separator may have an average pore diameter from 0.01 to 10µm, and an average thickness from 5 to 300µm.

Meanwhile, the lithium secondary battery according to the present invention is not particularly limited, but may be variously applied as cylindrical, prismatic, pouch-type, or coin-type, depending on the purpose to be performed. The lithium secondary battery according to an exemplary embodiment of the present invention may be a pouch-type secondary battery.

Hereinafter, the present invention will be described in more detail by way of examples and experimental examples.

However, the following examples and experimental examples are only illustrative of the present invention, and the contents of the present invention are not limited to the following examples and experimental examples.

### Examples 1-25 and Comparative Examples 1-4. Preparation of Electrolyte Composition for Lithium Secondary Battery

A non-aqueous electrolyte composition for a lithium secondary battery was prepared by mixing electrolyte additives in a non-aqueous solvent in which LiPF₆ was dissolved in 1 M, weighed based on the total weight of the electrolyte composition. Here, the type of lithium salt, the composition of the non-aqueous solvent, and the type and content of the electrolyte additive are shown in Table 1 below.

**[Table 1]**

| | Electrolyte additive, | | Ester type solvent | | auxiliary | solvent |
|---|---|---|---|---|---|---|
| | kinds | content [wt.%] | kinds | content ratio [vol.%] | kinds | content ratio [vοl.%] |
| Example 1 | 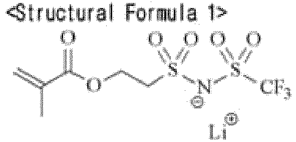 | 2 | DHF | 100 | - | |
| Example 2 | | | FDHF | 100 | - | - |
| Example 3 | | | DHF | 70 | EMC | 30 |
| Example 4 | | | DHF | 80 | FEC | 20 |
| Example 5 | | | DHF | 70 | TMP | 30 |
| Example 6 | | | DHF | 70 | sulfolane | 30 |
| Example 7 | | | DHF | 50 | EMC | 50 |
| Example 8 | | | DHF | 50 | FEC | 50 |
| Example 9 | | | DHF | 50 | TMP | 50 |
| Example 10 | | | DHF | 50 | sulfolane | 50 |
| Example 11 | | | - | - | EC:EMC (3:7 vol./vo I,) | 100 |
| | | | | | | |
| Example 12 | | | - | - | FEC | 100 |
| Example 13 | | | - | - | TMP | 100 |
| Example 14 | | | - | - | sulfolane | 100 |
| Example 15 | | 0.001 | DHF | 100 | | |
| Example 16 | | 10 | DHF | 100 | | |
| Example 17 | 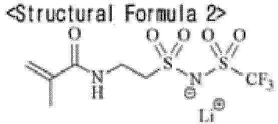 | 2 | DHF | 100 | - | - |
| Example 18 | 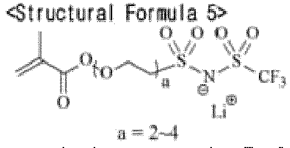 | | | | | |
| Example 19 | 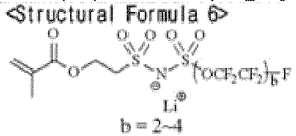 | | | | | |
| Example 20 | 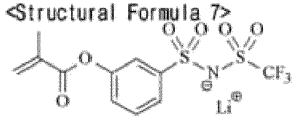 | | | | | |
| Example 21 | 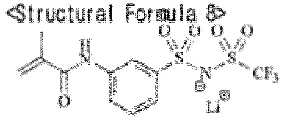 | | | | | |

| | Electrolyte additive | | Ester type solvent | | auxiliary solvent | |
|---|---|---|---|---|---|---|
| | kinds | content [wt.%] | kinds | content ratio [vol.%] | kinds | content ratio [vol.%] |
| Example 22 | 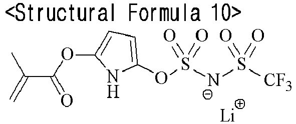 | 2 | DHF | 100 | - | - |
| Example 23 | 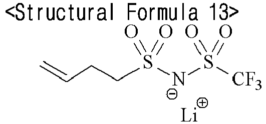 | | | | | |
| Example 24 | 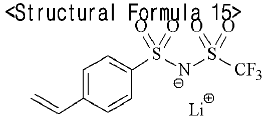 | | | | | |
| Example 25 | 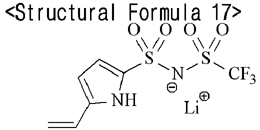 | | | | | |
| Comparat ive Example 1 | Not added | - | DHF | 100 | - | - |
| Comparat ive Example 2 | Not added | - | - | - | EC:EMC (3:7 vol./vo I.) | 100 |
| Comparat ive Example 3 | 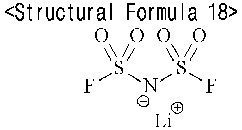 | 2 | DHF | 100 | - | - |
| Comparat ive Example 4 | 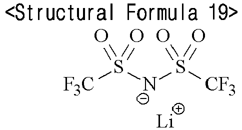 | 2 | DHF | 100 | - | - |
| DHF: Dihydrofuranone | | | | | | |
| FDHF: Fluorodihydrofuranone | | | | | | |
| EMC: elthyl methyl carbonate | | | | | | |
| FEC: Fluoro ethylene carbonate | | | | | | |
| TMP: Trimethyl phosphate | | | | | | |

### Comparative Example 5. Preparation of Electrolyte Composition for Lithium Secondary Battery

A non-aqueous electrolyte composition for a lithium secondary battery was prepared by performing the same method as in Example 1, except that an oligomer (weight average molecular weight: 2,500 to 5,000) polymerized with the compound represented by the following Structural Formula 1 was used instead of the compound represented by the Structural Formula 1 as an electrolyte additive.

### Examples 26-50 and Comparative Examples 6-10. Preparation of Lithium Secondary Battery

LiNi_{0.7}Co_{0.1}Mn_{0.1}Al_{0.1}O₂ with a particle size of 5 µm as a positive electrode active material was prepared, mixed with a carbon-based conductive material and polyvinylidene fluoride as a binder in a weight ratio of 94:3:3 to N-methyl pyrrolidone (NMP) to form a slurry, cast onto aluminum thin plate, dried in a 120°C vacuum oven, and rolled to prepare a positive electrode.

Separately, a negative electrode active material in which natural graphite and artificial graphite are mixed in a weight ratio of 1:1 was prepared, and 97 parts by weight of the negative electrode active material and 3 parts by weight of styrene butadiene rubber (SBR) were mixed with water to form a slurry, cast onto copper thin plate, dried in a 130°C vacuum oven, and rolled to prepare a negative electrode.

A lithium secondary battery was assembled by interposing a separator made of 18µm polypropylene between the positive electrode and negative electrode obtained above, inserting it into the case, and then injecting the electrolyte composition prepared in the above Example and the Comparative Example as shown in Table 2 below.

An initial charge was performed on each assembled lithium secondary battery. Specifically, an activated lithium secondary battery was prepared by initially charging the lithium secondary battery to a charge termination voltage of 4.2V at 55±2°C under the conditions shown in Table 2 below.

**Table 2]**

| | Type of electrolyte composition | | Type of electrolyte composition |
|---|---|---|---|
| Example 26 | Composition of Example 1 | Example 41 | Composition of Example 16 |
| Example 27 | Composition of Example 2 | Example 42 | Composition of Example 17 |
| Example 28 | Composition of Example 3 | Example 43 | Composition of Example 18 |
| Example 29 | Composition of Example 4 | Example 44 | Composition of Example 19 |
| Example 30 | Composition of Example 5 | Example 45 | Composition of Example 20 |
| Example 31 | Composition of Example 6 | Example 46 | Composition of Example 21 |
| Example 32 | Composition of Example 7 | Example 47 | Composition of Example 22 |
| Example 33 | Composition of Example 8 | Example 48 | Composition of Example 23 |
| Example 34 | Composition of Example 9 | Example 49 | Composition of Example 24 |
| Example 35 | Composition of Example 10 | Example 50 | Composition of Example 25 |
| Example 36 | Composition of Example 11 | Comparative Example 6 | Composition of Comparative Example 1 |
| Example 37 | Composition of Example 12 | Comparative Example 7 | Composition of Comparative Example 2 |
| Example 38 | Composition of Example 13 | Comparative Example 8 | Composition of Comparative Example 3 |
| Example 39 | Composition of Example 14 | Comparative Example 9 | Composition of Comparative Example 4 |
| Example 40 | Composition of Example 15 | Comparative Example 10 | Composition of Comparative Example 5 |

### Experimental Example 1.

To evaluate the performance of the electrolyte composition according to the present invention, the following experiments were performed on the electrolyte compositions use in the example and the comparative example.

### a) Cyclic Voltammetry (CV) Evaluation of Three-Electrode Cell

First, to confirm that a coating layer is formed on the positive electrode surface, a three-electrode cell was manufactured by injecting the electrolyte compositions used in Examples 1-25 and Comparative Examples 1-5, respectively, into a cell including a platinum electrode, a platinum electrode, and a lithium metal electrode as the three-electrode, and cyclic voltammetry (CV) analysis was performed on each manufactured cell. Here, the cyclic voltammetry (CV) was performed at 60°C under the conditions of an observation range of 3.0 to 6.0 V (based on lithium) and a measurement rate of 10 mV/s. In addition, the oxidation decomposition potential of the electrolyte composition relative to lithium (Li/Li⁺) was calculated, and the results are shown in Table 3 below.

**[Table 3]**

| | Oxidation potential window | | Oxidation potential window |
|---|---|---|---|
| Example 1 | Approx. 5.65±0.05V | Example 16 | Approx. 4.80±0.05V |
| Example 2 | Approx. 5.35±0.05V | Example 17 | Approx. 5.65±0.05V |
| Example 3 | Approx. 5.75±0.05V | Example 18 | Approx. 5.55±0.05V |
| Example 4 | Approx. 5.60±0.05V | Example 19 | Approx. 5.75±0.05V |
| Example 5 | Approx. 5.40±0.05V | Example 20 | Approx. 5.45±0.05V |
| Example 6 | Approx. 5.25±0.05V | Example 21 | Approx. 5.50±0.05V |
| Example 7 | Approx. 5.15±0.05V | Example 22 | Approx. 5.40±0.05V |
| Example 8 | Approx. 5.20±0.05V | Example 23 | Approx. 5.35±0.05V |
| Example 9 | Approx. 5.20±0.05V | Example 24 | Approx. 5.45±0.05V |
| Example 10 | Approx. 5.25±0.05V | Example 25 | Approx. 5.50±0.05V |
| Example 11 | Approx. 4.95±0.05V | Comparative Example 1 | Approx. 4.85±0.05V |
| Example 12 | Approx. 5.00±0.05V | Comparative Example 2 | Approx. 4.85±0.05V |
| Example 13 | Approx. 4.90±0.05V | Comparative Example 3 | Approx. 4.70±0.05V |
| Example 14 | Approx. 4.85±0.05V | Comparative Example 4 | Approx. 4.75±0.05V |
| Example 15 | Approx. 5.00±0.05V | Comparative Example 5 | Approx. 4.90±0.05V |

As shown in Table 3, the electrolyte composition according to the present invention was found to have an expanded oxidation potential window upon inclusion of the electrolyte additive represented by Chemical Formula 1. Specifically, the electrolyte composition of the Examples contained an electrolyte additive and showed an increase in current above approximately 5.15±0.05V. In contrast, the electrolyte composition of the Comparative Examples, which do not include an electrolyte additive or include an electrolyte additive different from the present invention, showed an increase in current at 4.90±0.05V or less.

This increase in current indicates that oxidative decomposition of the electrolyte occurs to form an organic-inorganic coating layer on the positive electrode surface. In other words, it indicates that the electrolyte composition of the Examples, compared to the electrolyte composition of the Comparative Examples, expands the oxidation potential window by about 0.25 V or more by containing the electrolyte additive represented by Chemical Formula 1. From these results, it can be seen that the electrolyte composition according to the present invention has improved oxidation stability.

### b) Differential Capacity Curve Analysis of Half Cell

To confirm the action of the electrolyte composition according to the present invention on the negative electrode surface, a half cell was manufactured using lithium metal and graphite (artificial graphite:natural graphite=9:1 weight ratio mix), and the electrolyte composition prepared in Examples 1-25 and Comparative Examples 1-5, respectively, was injected into the half cell. The cells were then charged from 3.5±0.5 V to 0.05 V at a rate of 0.005 C at 25°C. The potential value (V) and capacity value (mAh) were measured, and the reduction potential value was calculated by differentiating the potential value from the capacity value (dQ/dV).

As a result, it was confirmed that the electrolyte composition of the Examples including the electrolyte additive represented by Chemical Formula 1 according to the present invention exhibits a falling peak at a voltage near 1.32 V relative to lithium, unlike the electrolyte composition of the Comparative Examples not including the electrolyte additive. The falling peak indicates that a reduction reaction has occurred on the surface of the graphite electrode, which is the negative electrode, indicating that the electrolyte additive represented by Chemical Formula 1 included in the electrolyte composition is converted into a film material through a reduction reaction on the surface of the negative electrode at a voltage near 1.32V relative to lithium.

From these results, it can be seen that in the lithium secondary battery according to the present invention, a reduction reaction is induced on the negative electrode surface during the activation process to form an organic-inorganic coating layer.

### Experimental Example 2.

To evaluate the oxidation stability of the electrolyte composition according to the present invention under high temperature and high voltage conditions, high-rate discharge capacity and the amount of gas generation were measured for the lithium secondary batteries prepared in Examples 26-50 and Comparative Examples 6-10.

Specifically, the lithium secondary batteries of Examples 26-50 and Comparative Examples 6-10 were each activated by charging at 25°C at a rate of 0.33C to 4.2V under CC-CV conditions and discharging at a rate of 0.33C to 2.5V under CC conditions. Then, each activated lithium secondary battery was charged at a rate of 0.33C to 4.5V under CC-CV conditions and discharged at a rate of 0.33C to 2.5V under CC conditions. Three cycles of charge and discharge were performed considering each charge and discharge as one cycle.

The volume of the secondary battery was then measured using the Archimedes principle. Then, at 60°C, it was fully charged to 4.5V at a rate of 0.33C under CC-CV condition and discharged to 2.5V under CC condition at a rate of 2.5C to measure the high-rate discharge capacity at high temperature. In addition, once the high-rate discharge capacity measurement was completed, the volume of the secondary battery was measured and the volume change was calculated in the same way as the previous volume measurement. In this case, the volume change was determined to indicate the amount of gas generated during the high-temperature/high-rate charge/discharge. The results are shown in Table 4 below.

**[Table 4]**

| | High-rate discharge capacity [mAh] | Volume change [µl] | | High-rate discharge capacity [mAh] | Volume change [µl] |
|---|---|---|---|---|---|
| Example 26 | 679.8 | 1315 | Example 41 | 670.9 | 1914 |
| Example 27 | 681.3 | 1321 | Example 42 | 682.1 | 1329 |
| Example 28 | 683.5 | 1465 | Example 43 | 676.8 | 1338 |
| Example 29 | 682.9 | 1354 | Example 44 | 675.2 | 1351 |
| Example 30 | 677.2 | 1367 | Example 45 | 685.2 | 1323 |
| Example 31 | 687.4 | 1343 | Example 46 | 686.7 | 1317 |
| Example 32 | 671.8 | 1762 | Example 47 | 678.0 | 1329 |
| Example 33 | 673.8 | 1783 | Example 48 | 673.1 | 1335 |
| Example 34 | 669.0 | 1774 | Example 49 | 674.9 | 1339 |
| Example 35 | 668.1 | 1723 | Example 50 | 674.8 | 1348 |
| Example 36 | 670.7 | 2036 | Comparative Example 6 | 661.4 | 2009 |
| Example 37 | 672.4 | 1988 | Comparative Example 7 | 652.2 | 2023 |
| Example 38 | 660.3 | 1847 | Comparative Example 8 | 658.7 | 1947 |
| Example 39 | 672.2 | 1799 | Comparative Example 9 | 659.3 | 1929 |
| Example 40 | 671.8 | 1876 | Comparative Example 10 | 649.3 | 2183 |

It can be seen that the lithium secondary battery according to the present invention has excellent oxidation stability by including the electrolyte composition of the present invention with an expanded oxidation potential window, and thus exhibits excellent battery performance under high temperature and high voltage conditions.

Specifically, it has been confirmed that the lithium secondary batteries manufactured in the Examples exhibit a high discharge capacity of 665mAH or more under high temperature and high voltage conditions by including an electrolyte composition containing an electrolyte additive represented by Chemical Formula 1. In particular, when the electrolyte composition of the lithium secondary battery of the Examples included an ester-based organic solvent, the amount of gas generated by decomposition of the electrolyte composition during charge and discharge was found to be low, less than 1900mL.

From these results, it can be seen that the lithium secondary battery according to the present invention exhibits excellent electrical performance even under high temperature and/or high voltage conditions by including an electrolyte composition including an electrolyte represented by Chemical Formula 1 and having an oxidation potential window at 4.5V or higher.

While the foregoing has been described with reference to preferred examples of the present invention, it will be understood by those skilled in the art or having ordinary knowledge of the art that various modifications and changes can be made to the present invention without departing from the field of thought and technology described in the patent claims that will follow.

Accordingly, the technical scope of the present invention is not limited to what is described in the detailed description of the specification, but should be determined by the claims of the patent.

## Claims

1. An electrolyte composition comprising a non-aqueous organic solvent, a lithium salt, and an electrolyte additive represented by Chemical Formula 1 below, wherein
the oxidation potential window is above 4.5 volts: 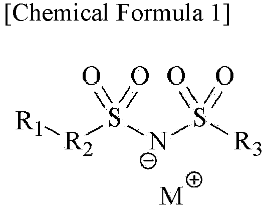
In Chemical Formula 1,
R₁ is 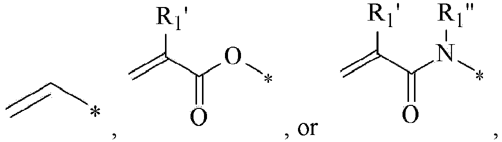
R₁' and Ri"are hydrogen or methyl group, respectively,
R₂ includes one or more species selected from a group consisting of an oxygen atom; a nitrogen atom; a sulfur atom; an arylene group having a carbon number of 6 to 20; an aryleneoxy group having a carbon number of 6 to 20; a heteroarylene group having a carbon number of 5 to 10 including one or more heteroatoms among N, S, and O; a heteroaryleneoxy group having a carbon number of 5 to 10 including one or more heteroatoms among N, S, and O; an alkylene group having a carbon number of 1 to 10; an alkyleneoxy group having a carbon number of 1 to 10; a cycloalkylene group having a carbon number of 5 to 10;
and 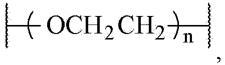
R₃ is a fluorine group, an alkyl group with carbon number 1 to 10, an alkoxy group with carbon number 1 to 10, or 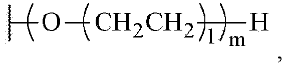 wherein
one or more of the hydrogens included in the alkyl group, alkylene group, alkoxy group, alkyleneoxy group, cycloalkylene
group, 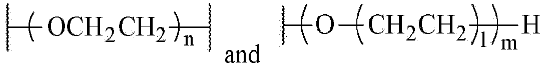 is optionally substituted with a fluorine atom,
M includes one or more species among lithium, sodium, potassium, tetraalkylammonium with a carbon number of 1 to 4, and tetraalkylphosphonium with a carbon number of 1 to 4,
l is an integer from 1 to 6, and
m and n are integers from 2 to 20.

2. The electrolyte composition of claim 1, wherein the oxidation potential window is between 5.0 to 6.0 volts.

3. The electrolyte composition of claim 1, wherein R₂ is ethylene, propylene, cyclohexylene, phenylene, oxymethylene, pyrrylene, oxyphenylene, oxynaphthalenylene, oxypyrrylene, oxythiophenylene, oxypuranylene, or 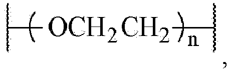
R₃ is a fluorine group, a methyl group, a methyl fluoride group, a methoxy group, a methoxy fluoride group, or 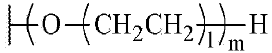 , wherein one or more hydrogens included in 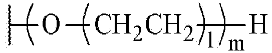 is optionally substituted with a fluorine atom, and
M is lithium.

4. The electrolyte composition of claim 1, wherein the electrolyte additive represented by Chemical Formula 1 comprises one or more compounds among <Structural Formula 1> to <Structural Formula 17 below>:
| | | |
|---|---|---|
| <Structural Formula 1> | <Structural Formula 2> | <Structural Formula 3> |
| 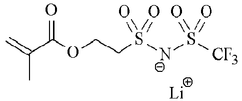 | 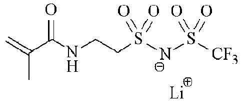 | 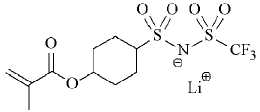 |
| <Structural Formula 4> | <Structural Formula 5> | <Structural Formula 6> |
| 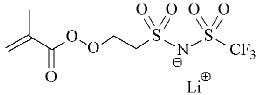 | 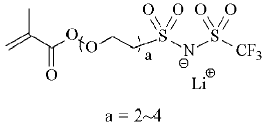 | 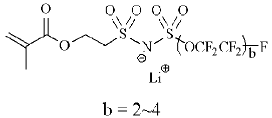 |
| <Structural Formula 7> | <Structural Formula 8> | <Structural Formula 9> |
| 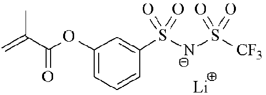 | 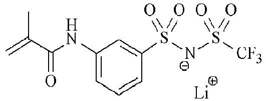 | 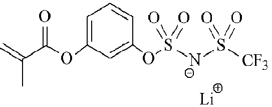 |
| <Structural Formula 10> | <Structural Formula 11> | <Structural Formula 12> |
| 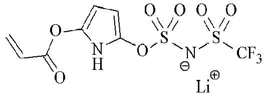 | 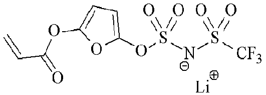 | 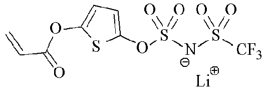 |
| | | |
| <Structural Formula 13> | <Structural Formula 14> | <Structural Formula 15> |
| 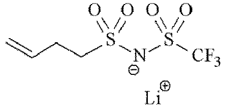 | 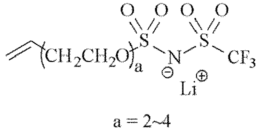 | 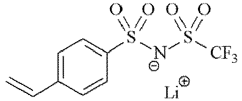 |
| <Structural Formula 16> | <Structural Formula 17> | |
| 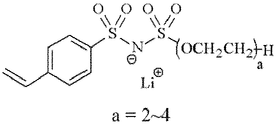 | 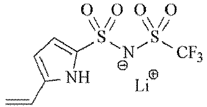 | |

5. The electrolyte composition of claim 1, wherein the electrolyte additive represented by Chemical Formula 1 is included no more than 10 wt% by weight of a total weight of the electrolyte composition.

6. The electrolyte composition of claim 1, wherein the non-aqueous organic solvent comprises an ester-based solvent represented by Chemical Formula 2 below: 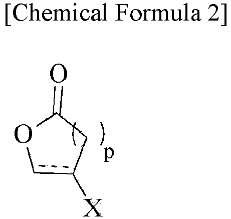 In Chemical Formula 2,
is either a single bond or a double bond,
X is hydrogen, fluoro group, methyl group, ethyl group, methyl fluoride group, ethyl fluoride group, or vinyl group, respectively, and
p is an integer from 1 to 3.

7. The electrolyte composition of claim 6, wherein the ester-based solvent represented by Chemical Formula 2 comprises one or more species among dihydrofuranone, vinyl dihydrofuranone, fluorodihydrofuranone, furanone, and tetrahydropyranone.

8. The electrolyte composition of claim 1, wherein the non-aqueous organic solvent further comprises one or more co-solvents among: an ether-based solvent containing fluorine; a cyclic carbonate-based solvent containing fluorine; a linear carbonate-based solvent; a phosphate-based solvent and a sulfone-based solvent.

9. The electrolyte composition of claim 8, wherein the co-solvents is included in less than 50 volume% with respect to the total volume of the non-aqueous organic solvents.

10. A lithium secondary battery comprising:
an electrode assembly including a positive electrode, a negative electrode, and a separator disposed between the positive electrode and the negative electrode; and
the electrolyte composition according to claim 1.

11. The lithium secondary battery of claim 10, wherein the positive electrode comprises one or more positive electrode active materials among lithium metal oxides represented by Chemical Formula 3 or Chemical Formula 4 below:
[Chemical Formula 3] Liₓ[Ni_{y}Co_{z}Mn_{w}M¹ᵥ]O₂
[Chemical Formula 4] LiM²ₚMn_{q}PᵣO₄
In Chemical Formula 3 and Chemical Formula 4,
M¹ is one or more of the following elements: W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.5≤y<1, 0<z≤0.3, 0<w≤0.3, and 0≤v≤0.1, respectively, wherein y+z+w+v=1,
M² is Ni, Co, or Fe,
p is 0.05≤p≤1.0 and,
q is either 1-p or 2-p, and
r is 0 or 1.

12. The lithium secondary battery of claim 11, wherein the positive electrode active material comprises one or more species among LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, and LiNi_{0.5}Mn_{1.5}O₄.

13. The lithium secondary battery of claim 10, wherein the negative electrode comprises a first negative electrode active material containing carbon material and a second negative electrode active material containing silicon material, and
the carbon material comprises at least one selected from the group consisting of natural graphite, artificial graphite, expanded graphite, hard carbon, carbon black, acetylene black, and ketjen black.

14. The lithium secondary battery of claim 13, wherein the silicon material comprises one or more selected from the group consisting of silicon (Si), silicon carbide (SiC), or silicon oxide represented by SiO_{q}, where 0.8≤q≤2.5.

15. The lithium secondary battery of claim 13, wherein the second negative electrode active material is included in 1 to 20 wt% of the total weight of the negative electrode active material.
